# EUROPÄISCHE PATENTSCHRIFT

(11) **EP 1 436 514 B1**
(45) Veröffentlichungstag und Bekanntmachung des Hinweises auf die Patenterteilung: **29.03.2006**
(21) Anmeldenummer: 02774466.3
(22) Anmeldetag: 17.10.2002
(51) Int. Cl.: F16C 11/06

(54) **KUGELGELENK FÜR KRAFTFAHRZEUGE**
BALL JOINT FOR MOTOR VEHICLES
JOINT SPHERIQUE POUR VEHICULES

(30) Priorität: 17.10.2001 DE 20116794 U
(43) Veröffentlichungstag der Anmeldung: 14.07.2004
(73) Patentinhaber: ZF Lemförder Metallwaren AG, 49441 Lemförde (DE)
(72) Erfinder: ABELS, Olaf, 49191 Belm (DE)
(86) Internationale Anmeldenummer: PCT/DE2002/003924
(87) Internationale Veröffentlichungsnummer: WO 2003/036108

(56) Entgegenhaltungen:
- EP-A- 1 052 418
- CH-A- 465 971
- DE-C- 19 850 378
- US-A- 3 208 779
- US-A- 5 092 704

## Beschreibung

Die Erfindung betrifft ein Kugelgelenk für Kraftfahrzeuge, welches einen Kugelzapfen aufweist, der zumindest aus einer in einer Lagerschale eines Gehäuses drehbar und/oder schwenkbar aufgenommenen Gelenkkugel und einem Zapfenabschnitt besteht. Darüber hinaus sind die inneren Gelenkbauteile des Kugelgelenkes durch einen Dichtungsbalg gegen das Eindringen von Verunreinigungen und Feuchtigkeit geschützt. Der Dichtungsbalg gattungsgemäßer Kugelgelenke weist einen ersten Randbereich auf, welcher an dem Gehäuse befestigt ist. Ein zweiter Randbereich des Dichtungsbalges ist über eine Gleitverbindung mit einem auf dem Zapfenabschnitt des Kugelzapfens festgelegten Laufring verbunden. Der Laufring weist dabei einen Axialbund sowie einen winklig dazu angeordneten Radialbund auf. Ein derartiges Kugelgelenk fur Kraftfahrzeuge geht beispielsweise aus der CH 465 971 hervor. Während der erste Randbereich des Dichtungsbalges durch wenigstens einen Spannring an dem Gehäuse des Kugelgelenkes befestigt ist, weist der zweite Randbereich eine Gleitverbindung mit dem Laufring auf. Diese ist bei der bekannten Ausführung insbesondere erforderlich, um bei Drehbewegungen des Kugelzapfens um seine Längsachse eine Relativbewegung zwischen Dichtungsbalg und Kugelzapfen zu ermöglichen. Ohne eine derartige Beweglichkeit würde der zumeist aus Gummi bestehende Dichtungsbalg unzulässig beansprucht und vorzeitig verschleißen, da Zugbelastungen eine den Gummi schädigende Wirkung haben können. Die Lebensdauer eines derartigen Kugelgelenkes wäre folglich reduziert.
Da Kugelgelenke für Radaufhängungen in Kraftfahrzeugen häufig im radnahen Bereich angebracht werden, wie dies bei Traggelenken oder Führungsgelenken der Fall ist, werden sie beispielsweise durch Öle, Fette, Schmutz, Spritzwasser und aggressive Medien, wie Salzlaugen extrem belastet, weshalb an die Abdichtung der Kugelgelenke besonders hohe Anforderungen gestellt werden müssen.
Wie eingangs bereits ausgeführt, ist es zum Ausgleich der Drehbewegungen des Kugelzapfens förderlich, Laufringe für einen der Dichtungsbalgränder vorzusehen. Es besteht jedoch beim Einsatz von Laufringen ein weiteres Gefährdungspotential für die Gelenkbauteile, da ein Unterwandern dieser Laufringe mit Feuchtigkeit beziehungsweise durch aggressive Medien, beispielsweise durch Kriechen, dazu führen würde, dass insbesondere im Laufringbereich derartiger Kugelgelenke Korrosionserscheinungen auftreten könnten, was letztlich zu einer verkürzten Lebensdauer des Kugelgelenkes führen würde, weil durch die entstehende Korrosion in dem Kontaktbereich die Gelenkbauteile schneller verschleißen, als es erwünscht ist und damit das Eindringen von Feuchtigkeit und Verunreinigungen in die empfindlichen Gelenkbauteile im Innern des Kugelgelenkes nicht mehr zu verhindern wäre. Auch zusätzliche Abdichtungsmaßnahmen im Kontaktbereich Laufring/Kugelzapfen schließen diese Gefahr nicht vollständig aus. Insbesondere die Reinigung mit Hochdruckreinigungsgeräten stellt an die Abdichtung betroffener Baugruppen erhöhte Anforderungen.

Der Erfindung liegt die technische Problemstellung zu Grunde, ein Kugelgelenk zu entwickeln, das die empfindlichen Gelenkbauteile gegen Verunreinigungen, Spritzwasser oder korrosive Einflüsse verbessert schützt.

Diese technische Problemstellung wird mit den Merkmalen des Patentanspruches 1 gelöst. Weitere Ausgestaltungen der Erfindung sind Gegenstand der Unteransprüche.

Ein erfindungsgemäßes Kugelgelenk ist dementsprechend dadurch gekennzeichnet, dass der Radialbund des Laufringes eine Wellenkontur bildet.

Durch eine derartige Ausführung eines Kugelgelenkes wurde eine sehr einfache und damit kostengünstige Variante geschaffen, die das Kugelgelenk in wirksamer Weise schützt und damit seine Lebensdauer insgesamt erhöht. Zusätzliche aufwendige Dichtmaßnahmen der kritischen Laufringabschnitte sind vermeidbar. Ein erfindungsgemäßes Kugelgelenk zeichnet sich durch herausragende Spritzwasser- und Korrosionsbeständigkeit aus.

Einer Ausgestaltung der Erfindung entsprechend sollte sich der Radialbund im Einbauzustand des Kugelgelenkes im Kraftfahrzeug elastisch gegen die Oberfläche eines Kraftfahrzeugbauteiles abstützen. Dadurch wird während des Einbaus des Kugelgelenkes in das Kraftfahrzeug eine zunehmende Abdichtung zwischen dem Laufring und dem benachbarten Kraftfahrzeugbauteil erreicht, welches beispielsweise ein Hebelauge eines Radträgers sein kann.

Der Laufring ist vorteilhafter Weise so gestaltet, dass sein Radialbund in radialer Richtung betrachtet, also ausgehend vom Axialbund zunächst einen ersten Wellenberg, ein sich daran anschließendes Wellental und darauffolgend einen zweiten Wellenberg aufweist. Durch eine derartige Ausführung wird die dem Laufringmaterial inhärente Elastizität verstärkt.
Dabei hat es sich insbesondere für die Elastizität des Radialbundes als nützlich erwiesen, wenn die Wellenberge auf eine gemeinsame Ebene bezogen eine unterschiedliche Höhe aufweisen, wobei bevorzugt der erste Wellenberg eine größere Höhe aufweisen sollte, als der zweite Wellenberg. Damit läßt sich die Anlage an dem zugeordneten Kraftfahrzeugbauteil verbessern. Femer ist die Verformung des Laufringes definierbar und die Gefahr des Abhebens des radial äußeren Randbereiches des Laufringes vom Kraftfahrzeugbauteil kann ausgeschlossen werden, was eine zuverlässige, sichere Anlage und damit Abdichtung in diesem Bereich bedeutet.

Um Korrosion und damit vorzeitigen Verschleiß des sensiblen Dichtbereiches zu vermeiden sollte der Laufring aus korrosionsbeständigem Material hergestellt sein, wobei er vorzugsweise aus Edelstahl bestehen kann.

Zur Optimierung des Dichtsystems des Kugelgelenkes, können darüber hinaus weitere Maßnahmen vorgesehen sein. So ist es im Sinne der Erfindung möglich, den zweiten Randbereich des Dichtungsbalges an zumindest einer seiner Kontaktflächen mit dem Laufring mit einer Labyrinthdichtung auszustatten. Die Verbesserung der Anlage des Randbereich des Dichtungsbalges im Laufring kann ferner mittels eines an sich bekannten Spannringes erfolgen, welcher den Randbereich des Dichtungsbalges gegen den Laufring vorspannt.

Um zu vermeiden, dass der Randbereich des Dichtungsbalges in Richtung Gelenkkugel des Kugelzapfens wegrutscht und sich somit selbsttätig aus dem Laufring löst, wird ferner empfohlen, einen Ringbund an dem Axialbund des Laufringes anzuformen, das heißt ihn vorzugsweise einteilig mit dem Äxialbund auszubilden. Ferner ist es im Sinne der Erfindung möglich, einen Haltering zwischen dem Laufring und einer Kehlung der Gelenkkugel anzuordnen. Die Kehlung der Gelenkkugel befindet sich im Übergangsbereich zwischen dem Zapfenabschnitt des Kugelzapfens und der an diesem angeformten beziehungsweise angebrachten Gelenkkugel.

Entsprechend einer Weiterbildung kann selbstverständlich dieser Haltering mit dem Laufring einteilig ausgeführt sein. Der Einlagebereich des Laufringes für den Randbereich des Dichtungsbalges würde dementsprechend im Querschnitt betrachtet annähernd eine U-förmige Gestalt aufweisen, so dass der Randbereich des Dichtungsbalges in dem Laufring gleitend aufgenommen und gegen selbsttätiges axiales Verrutschen gesichert wäre.

Eine bevorzugte Ausführungsform eines erfindungsgemäßen Kugelgelenkes für Kraftfahrzeuge wird nachstehend unter Bezugnahme auf die zugehörige Zeichnung näher erläutert.
Es zeigt:
- Figur 1:: ausschnittsweise eine Darstellung eines erfindungsgemäßen Kugelgelenkes im Schnitt,
- Figur 2:: einen Laufring als Einzelteildarstellung im Schnitt,
- Figur 3:: die vergrößerte Darstellung III aus Figur 2 und
- Figur 4:: ausschnittsweise vergrößert die Darstellung des Laufringes mit einem Dichtungsbalgrandbereich.

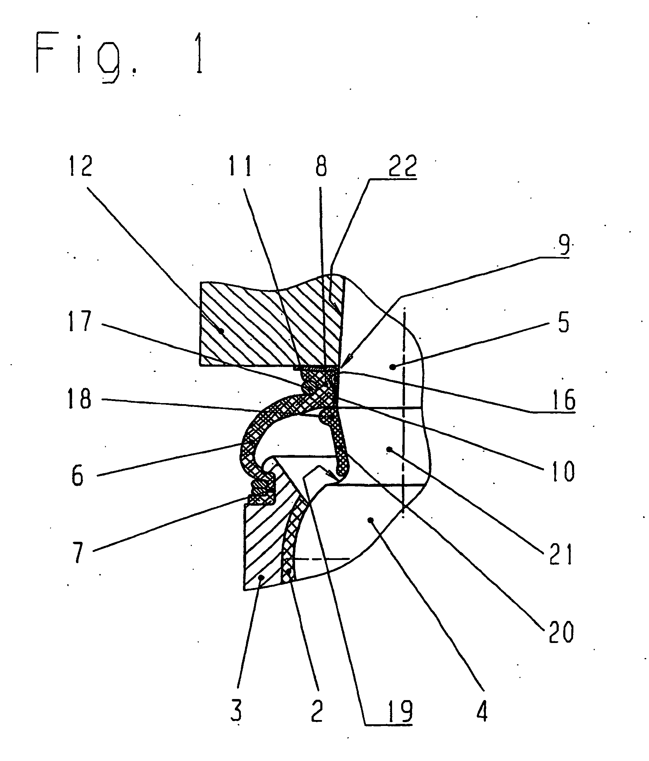

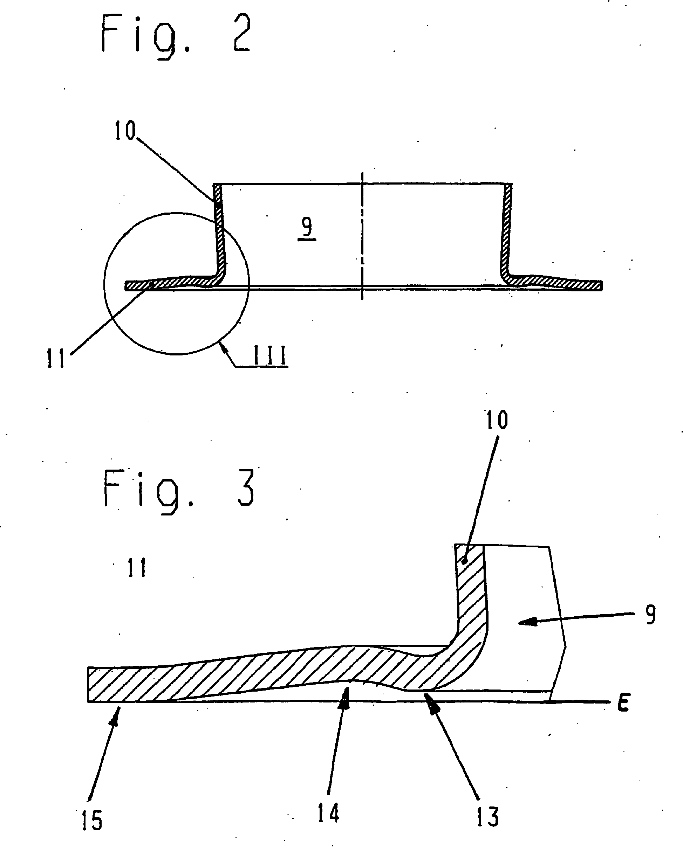

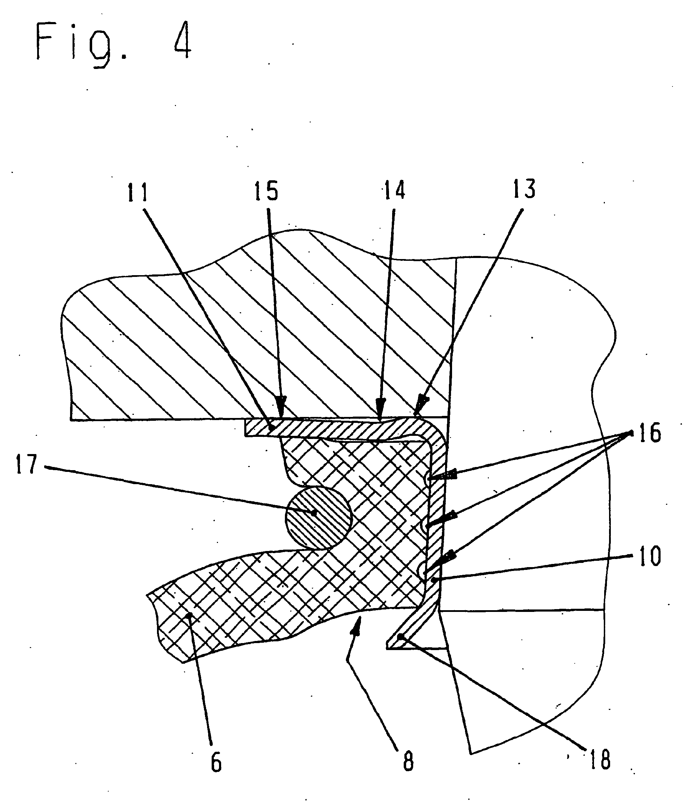

In den Figuren ist beispielhaft eine bevorzugte Ausfuhnmgsform eines erfindungsgemäßen Kugelgelenkes gezeigt. Dieses besteht aus einem Kugelzapfen 1, dessen Gelenkkugel 4 dreh- und kippbeweglich in einer in ein Gehäuse 3 des Kugelgelenkes eingesetzten Lagerschale 2 aufgenommen ist. Mit seinem an dem Kugelzapfen 1 ausgebildeten Zapfenabschnitt 5 durchragt der Kugelzapfen 1 eine Öffnung eines Kraftfahrzeugbauteiles 12. Endseitig weist der Kugelzapfen 1 einen in den Figuren nicht gezeigten Gewindebereich auf, mittels dessen er an dem Kraftfahrzeugbauteil 12 festlegbar ist. Zur Abdichtung der inneren Gelenkbauteile des Kugelgelenkes dient ein vorzugsweise aus Gummi hergestellter Dichtungsbalg 6, der zwei Randbereiche aufweist.
Ein erster Randbereich 7 ist in einer in das Gehäuse 3 eingebrachten Nut befestigt. Zur dichtenden Festlegung des ersten Randbereiches 7 dient in an sich bekannter Weise ein Spannring.
Gegenüberliegend diesem ersten Randbereich 7 weist der Dichtungsbalg 6 einen zweiten Randbereich 8 auf, welcher in einem festsitzend auf dem Kugelzapfen 1 befestigten Laufring 9 aufgenommen ist. Zur Verbesserung der Anlage des zweiten Randbereiches 8 des Dichtungsbalges 6 an dem Laufring 9 wird gemäß der Ausführungsform in Figur 1 ein Spannring 17 eingesetzt, der den Randbereich 8 zentripetal verspannt.
Der Laufring 9 besteht aus einem Axialbund 10, der an dem Zapfenbereich 5 des Kugelzapfens 1 festsitzt, sowie aus einem Radialbund 11, der bei der in Figur 1 gezeigten, den Einbauzustand im Kraftfahrzeug darstellenden Ansicht etwa rechtwinklig zu dem Axialbund verläuft. Der Radialbund 11 weist eine besondere Gestaltung auf. Er ist ausgehend vom Axialbund 10 in radialer Richtung betrachtet wellenförmig ausgeführt. Diese Wellenform besteht, wie besser aus den Figuren 2, 3 und 4 entnehmbar ist, aus einem ersten Wellenberg 13, welcher in ein sich daran anschließendes Wellental 14 übergeht, worauf ein zweiter Wellenberg 15 folgt. Durch diese wellenförmige Gestaltung des Radialbundes 11 des Laufringes 9 kann bei montiertem Kugelgelenk eine elastische Anlage dieses Radialbundes 11 an dem Kraftfahrzeugbauteil 12 gewährleistet werden. Dadurch wird die Abdichtung in diesem sensiblen Gelenkbereich gegenüber bekannten Ausführungen in entscheidendem Maße verbessert.
Der Laufring 9 liegt bei dem in Figur 1 gezeigten Ausführungsbeispiel mit seinem Axialbund 10 an dem Zapfenabschnitt 5 des Kugelzapfens an, der hier konisch ausgestaltet ist und somit eine Presspassung mit einer korrespondierenden konischen Ausnehmung 22 des Kraftfahrzeugbauteiles 12 bildet. Durch die konische Ausführung des Zapfenabschnittes 5 des Kugelzapfens 1 zieht sich dieser während der Montage unverlierbar in die erwähnte Ausnehmung 22 hinein.
Darüber hinaus lässt sich die Dichtwirkung des Randbereiches 8 des Dichtungsbalges 6 verbessern, indem dieser zumindest auf einer Seite seiner Anlageflächen am Laufring 9 eine Labyrinthdichtung 16 aufweist. Bei dem in Figur 1 gezeigten Ausführungsbeispiel, wie es vergrößert aus der Figur 4 hervorgeht, ist die Labyrinthdichtung 16 des Randbereiches 8 an dem Axialbund 10 des Laufringes 9 vorgesehen.
Durch die in Folge der Bewegung des Kugelzapfens 1. hervorgerufene dynamische Belastung des Dichtungsbalges 6 besteht zumindest potentiell die Gefahr, dass der Randbereiches 8 des Dichtungsbalges 6 in axialer Richtung auf die Gelenkkugel zu aus dem Laufring 9 herauswandert. Um dies zu verhindern ist, wie dies anschaulich in der Figur 4 zu erkennen ist, an dem Laufring 9 ein Ringbund 18 angeformt. Dieser Ringbund 18 verhindert das axiale Abgleiten des Randbereiches 8 des Dichtungsbalges 6.

In der Figur 3 weisen die Wellenberge 13 und 15 auf eine gemeinsame Ebene bezogen eine unterschiedliche Höhe auf, wobei der zweite Wellenberg 15 eine größere Höhe aufweist, als der erste Wellenberg 13. Dadurch konnte eine Elastizität des Laufringes 9 und insbesondere seines Radialbundes 11 erreicht werden, die eine optimale Abdichtfunktion in diesem Gelenkbereich gewährleistet, wenn das Kugelgelenk in das Kraftfahrzeugbauteil 12 eingebaut ist. Im eingebauten Zustand liegt der Radialbund 11 normalerweise so eng an der Oberfläche des Kraftfahrzeugbauteiles 12 an, dass sich die Form der Wellenberge 13 und 15 sowie des Wellentales 14 einer geradlinigen Berührungsfläche annähert.

Das axiale Auswandern des Randbereiches 8 des Dichtungsbalges 6 aus dem Laufring 9 heraus kann jedoch auch durch einen Haltering 20 erreicht werden, der in einem Halsbereich 21 des Kugelzapfens 1 angeordnet wird. Der Haltering 20 ist somit zwischen dem Endbereich des Laufringes 9 und einer Kehlung 19 vor Beginn der Gelenkkugel 4 des Kugelzapfens 1 angeordnet.
An dem Haltering 20 ist in diesem Fall, wie es auch aus der Figur 1 hervorgeht, zur Venneidung der axialen Auswanderung des Randbereiches 8 des Dichtungsbalges 6 ein Ringbund 18 angeformt.

### Bezugszeichenliste:

- 1: Kugelzapfen
- 2: Lagerschale
- 3: Gehäuse
- 4: Gelenkkugel
- 5: Zapfenabschnitt
- **6**: **Dichtungsbalg**
- 7: Erster Randbereich
- 8: Zweiter Randbereich
- 9: Laufring
- 10: Axialbund
- 11: Radialbund
- 12: Kraftfahrzeugbauteil
- 13: Erster Wellenberg
- 14: Wellental
- 15: Zweiter Wellenberg
- 16: Labyrinthdichtung
- 17: Spannring
- 18: Ringbund
- 19: Kehlung
- 20: Haltering
- **21**: **Halsbereich**
- 22: Konische Ausnehmung
- E: Ebene

## Patentansprüche

1. Kugelgelenk für Kraftfahrzeuge mit:
- einem Kugelzapfen (1), der zumindest aus einer in einer Lagerschale (2) eines Gehäuses (3) drehbar und/oder schwenkbar aufgenommenen Gelenkkugel (4) und einem Zapfenabschnitt (5) besteht,
- einem Dichtungsbalg (6), dessen erster Randbereich (7) an dem Gehäuse (3) befestigt ist und dessen zweiter Randbereich (8) eine Gleitverbindung mit einem auf dem Zapfenabschnitt (5) festgelegten Laufring (9) aufweist, der aus einem Axialbund (10) und einem Rädialbund (11) besteht,
**dadurch gekennzeichnet, dass**
der Radialbund (11) des Laufringes (9) eine Wellenkontur bildet.

2. Kugelgelenk nach Anspruch 1
**dadurch gekennzeichnet, dass**
der Radialbund (11) sich im Einbauzustand des Kugelgelenkes im Kraftfahrzeug elastisch gegen die Oberfläche eines Kraftfahrzeugbauteiles (12) abstützt.

3. Kugelgelenk nach Anspruch 1 oder 2,
**dadurch gekennzeichnet, dass**
der Radialbund (11) des Laufringes (9) in radialer Richtung ausgehend vom Axialbund (10) einen ersten Wellenberg (13), ein sich anschließendes Wellental (14) und darauffolgend einen zweiten Wellenberg (15) aufweist.

4. Kugelgelenk nach Anspruch 3,
**dadurch gekennzeichnet, dass**
die Wellenberge (13 und 15) auf eine gemeinsame Ebene bezogen eine unterschiedliche Höhe aufweisen, wobei bevorzugt der erste Wellenberg (13) eine geringere Höhe aufweist, als der zweite Wellenberg (15).

5. Kugelgelenk nach einem der vorstehend genannten Ansprüche,
**dadurch gekennzeichnet, dass**
der Laufring (9) aus korrosionsbeständigem Material hergestellt ist und vorzugsweise aus Edelstahl besteht.

6. Kugelgelenk nach einem der vorstehend genannten Ansprüche,
**dadurch gekennzeichnet, dass**
der zweite Randbereich (8) des Dichtungsbalges (6) an zumindest einer an dem Laufring (9) anliegenden Kontaktfläche eine Labyrinthdichtung (16) aufweist.

7. Kugelgelenk nach einem der vorstehend genannten Ansprüche,
**dadurch gekennzeichnet, dass**
der zweite Randbereich (8) des Dichtungsbalges (6) mittels eines Spannringes (17) gegen den Laufring (9) vorgespannt ist.

8. Kugelgelenk nach einem der vorstehend genannten Ansprüche,
**dadurch gekennzeichnet, dass**
das Kugelgelenk eine Axialsicherung an dem Laufring (9) aufweist, die aus einem an dem Axialbund (10) angeformten Ringbund (18) oder einem zwischen dem Laufring (9) und einer Kehlung (19) der Gelenkkugel (4) angeordneten Haltering (20) mit einem daran angeformten Ringbund (18) besteht.

9. Kugelgelenk nach Anspruch 8,
**dadurch gekennzeichnet, dass**
der Haltering (20) einteilig mit dem Laufring (9) ausgeführt ist.

## Claims

1. Ball joint for motor vehicles, with:
- a ball pin (1) consisting at least of a joint ball (4), which is held in a rotatable and/or pivotable manner in a bearing shell (2) of a housing (3), and a pin portion (5),
- sealing bellows (6), the first edge region (7) of which is fastened to the housing (3) and the second edge region (8) of which has a sliding connection with a track ring (9) which is secured to the pin portion (5) and consists of an axial collar (10) and a radial collar (11),
**characterised in that**
the radial collar (11) of the track ring (9) forms an undulatory contour.

2. Ball joint according to Claim 1,
**characterised in that**
the radial collar (11) is resiliently supported against the surface of a motor vehicle component (12) once the ball joint has been installed in the motor vehicle.

3. Ball joint according to Claim 1 or 2,
**characterised in that**,
in the radial direction from the axial collar (10), the radial collar (11) of the track ring (9) comprises a first wave crest (13), an adjoining wave trough (14) and subsequently a second wave crest (15).

4. Ball joint according to Claim 3,
**characterised in that**
the wave crests (13 and 15), related to a common plane, are of different heights, wherein the first wave crest (13) is preferably of a lesser height than the second wave crest (15).

5. Ball joint according to any one of the preceding Claims,
**characterised in that**
the track ring (9) is made of corrosion-resistant material and preferably consists of special steel.

6. Ball joint according to any one of the preceding Claims,
**characterised in that**
the second edge region (8) of the sealing bellows (6) comprises a labyrinth seal (16), at least at one contact face lying against the track ring (9).

7. Ball joint according to any one of the preceding Claims,
**characterised in that**
the second edge region (8) of the sealing bellows (6) is preloaded by means of a clamping ring (17) against the track ring (9).

8. Ball joint according to any one of the preceding Claims,
**characterised in that**
the ball joint comprises an axial securing means at the track ring (9), which means consists of an annular collar (18), which is formed on the axial collar (10), or a retaining ring (20) which is disposed between the track ring (9) and a throat (19) of the joint ball (4) and has an annular collar (18) formed thereon.

9. Ball joint according to Claim 8,
**characterised in that**
the retaining ring (20) is constructed in one piece with the track ring (9).

## Revendications

1. Joint à rotule pour véhicules automobiles comprenant :
- un axe de rotule (1) qui est composé d'au moins une rotule de joint (4) logée mobile en rotation et/ou en pivotement dans un coussinet (2) d'un boîtier (3), et d'un segment d'axe (5),
- un soufflet d'étanchéité (6) dont la première région marginale (7) est fixée au boîtier (3) et dont la deuxième région marginale (8) présente une liaison à glissement avec une bague de portée (9) fixée sur le segment d'axe (5) et qui est composée d'un collet axial (10) et d'un collet radial (11),
**caractérisé en ce que**
le collet radial (11) de la bague de portée (9) forme un profil ondulé.

2. Joint à rotule selon la revendication 1,
**caractérisé en ce que**
dans l'état monté du joint à rotule dans le véhicule automobile, le collet radial (11) s'appuie élastiquement contre la surface d'un élément (12) du véhicule automobile.

3. Joint à rotule selon la revendication 1 ou 2,
**caractérisé en ce que**
le collet radial (11) de la bague de portée (9) présente, dans la direction radiale en partant du collet axial (10), un premier sommet d'onde (13), un creux d'onde (14) qui y fait suite et, ensuite, un deuxième sommet d'onde (15).

4. Joint à rotule selon la revendication 3,
**caractérisé en ce que**
les sommets d'ondes (13 et 15) présentent chacun une hauteur différente par rapport à un plan commun, le premier sommet d'onde (13) présentant de préférence une plus petite hauteur que le deuxième sommet d'onde (15).

5. Joint à rotule selon une des revendications citées précédemment,
**caractérisé en ce que**
la bague de portée (9) est fabriquée en une matière résistante à la corrosion et est de préférence faite d'acier inoxydable.

6. Joint à rotule selon une des revendications citées précédemment,
**caractérisé en ce que**
la deuxième région marginale (8) du soufflet d'étanchéité (6) présente un joint à labyrinthe (16) sur au moins une surface de contact qui s'appuie contre la bague de portée (9).

7. Joint à rotule selon une des revendications citées précédemment,
**caractérisé en ce que**
la deuxième région marginale (8) du soufflet d'étanchéité (6) est pressée contre la bague de portée (9) avec précontrainte au moyen d'une bague de serrage (17).

8. Joint à rotule selon une des revendications citées précédemment,
**caractérisé en ce que**
le joint à rotule présente au niveau de la bague de portée (9) un arrêt axial qui est composé d'un collet annulaire (18) venu de formage sur le collet axial (10), ou d'une bague de retenue (20) disposée entre la bague de portée (9) et une gorge (19) de la rotule (4) du joint, et qui comprend un collet annulaire (18) venu de formage.

9. Joint à rotule selon la revendication 8,
**caractérisé en ce que**
la bague de retenue (20) est réalisée en une seule pièce avec la bague de portée (9).
